# EUROPÄISCHE PATENTSCHRIFT

(11) **EP 0 915 785 B1**
(45) Veröffentlichungstag und Bekanntmachung des Hinweises auf die Patenterteilung: **02.06.2004**
(21) Anmeldenummer: 98928060.7
(22) Anmeldetag: 24.03.1998
(51) Int. Cl.: B60S 1/38, B60S 1/40

(54) **WISCHBLATT FÜR SCHEIBEN VON KRAFTFAHRZEUGEN**
WIPER BLADE
BALAI D'ESSUIE-GLACE

(30) Priorität: 09.05.1997 DE 29708293 U
(43) Veröffentlichungstag der Anmeldung: 19.05.1999
(73) Patentinhaber: ROBERT BOSCH GMBH, 70442 Stuttgart (DE)
(72) Erfinder: KOTLARSKI, Thomas, D-77830 Bühlertal (DE)
(86) Internationale Anmeldenummer: PCT/DE1998/000859
(87) Internationale Veröffentlichungsnummer: WO 1998/051551

(56) Entgegenhaltungen:
- DE-A- 19 627 115
- FR-A- 1 069 875
- FR-A- 2 079 583
- FR-A- 2 079 711

## Beschreibung

### Stand der Technik

Bei wischblättern der im Oberbegriff des Anspruchs 1 bezeichneten Art soll das Tragelement für das gesamte vom wischblatt bestrichene Wischfeld eine möglichst gleichmäßige Verteilung des vom Wischerarm ausgehenden Wischblatt-Anpreßdrucks an der Scheibe gewährleisten. Durch eine entsprechende Krümmung des unbelasteten Tragelements - also wenn das Wischblatt nicht an der Scheibe anliegt - werden die Enden der im Betrieb des Wischblatts vollständig an der Scheibe anlegten wischleiste durch das dann gespannte Tragelement zur Scheibe belastet, auch wenn sich die Krümmungsradien von sphärisch gekrümmten Fahrzeugscheiben bei jeder Wischblattposition ändern. Die Krümmung des Wischblatts muß also etwas stärker sein als die im Wischfeld der zu wischenden Scheiben gemessene stärkste Krümmung. Das Tragelement ersetzt somit die aufwendige Tragbügelkonstruktion mit zwei in der Wischleiste angeordneten Tragelementen, wie sie bei herkömmlichen Wischblättern praktiziert wird.

Die Erfindung geht aus von einem Wischblatt nach der Gattung des Anspruchs 1. Bei einem bekannten Wischblatt dieser Art (DE-OS 26 14 457) ist die Anschlußvorrichtung einstückig mit dem Tragelement verbunden. Es besteht somit aus demselben Material wie das Tragelement. Dies mag möglicherweise solange von untergeordneter Bedeutung sein, als das Tragelement aus einem Kunststoff hergestellt und dieses deshalb durch Füllen einer entsprechenden Form gefertigt wird. Wenn das Tragelement jedoch aus Metall hergestellt werden soll, stehen sich zwei Forderungen diametral gegenüber. Es soll nämlich einmal das Tragelement gute Federeigenschaften aufweisen, andererseits sollen jedoch Ansätze der Anschlußvorrichtung problemlos aus der Ebene des Tragelements um etwa 90° herausgebogen und in dieser Position fixiert werden, damit die im Betrieb auftretenden Belastungen zwischen Wischblatt und Wischerarm an Anschlagflächen diese Ansätze aufgenommen werden können. Diese beiden Forderungen können praktisch kaum erfüllt werden, ohne daß man, hinsichtlich der Materialwahl, nachteilige Kompromisse eingehen muß.

Bei einem anderen bekannten, gattungsgemäßen Wischblatt (DE-AS 12 47 161) ist das Tragelement mit einer als separates Bauteil ausgebildeten Anschlußvorrichtung versehen. Diese Anschlußvorrichtung ist mit Hilfe von Nieten mit dem Tragelement fest verbunden. Die dazu erforderlichen Bohrungen im Tragelement führen jedoch zu einer unerwünschten, weil unkontrollierbaren Veränderung der Tragelement-Spannung, so daß kein befriedigendes Wischergebnis zu erreichen ist.

### Vorteile der Erfindung

Bei dem gemäß dem Kennzeichen des Anspruchs 1 ausgebildeten Wischblatt kann sowohl für das Tragelement als auch für die Anschlußvorrichtung eine den Forderungen an das jeweilige Bauteil gerecht werdende Materialwahl getroffen werden. Die Verbindung der beiden Bauteile miteinander erfolgt problemlos und preisgünstig mittels eines Klebers, so daß unerwünschte Querschnittsveränderungen des Tragelements vermieden werden.

Eine im Hinblick auf die Wischerarmausgestaltungen problemlos anpaßbare Anschlußvorrichtung ergibt sich, wenn diese einen im wesentlichen U-förmigen Querschnitt hat, und mit der die beiden U-Schenkel verbindenden U-Basis flächig an der von der Scheibe abgewandten Seite des bandartig ausgebildeten Tragelements anliegt.

Als Montagehilfe kann die U-Basis der Anschlußvorrichtung an ihrer von den U-Schenkeln abgewandten Seite mit Vorsprüngen versehen sein, welche quer zur Längserstreckung des Tragelements mit einem Abstand voneinander liegen, welcher auf die Breite des Tragelements abgestimmt ist.

Eine besonders gute seitliche Führung und Halterung der beiden zu verbindenden Bauteile miteinander wird erreicht, wenn die Vorsprünge als Leisten ausgebildet sind, die sich in Längsrichtung des Tragelements erstrecken.

Eine weiter verbesserte stabile Halterung der Anschlußvorrichtung an dem Tragelement wird erreicht, wenn an den freien, von der U-Basis abgewandten Enden der Leisten krallenartige, gegeneinander gerichtete Ansätze angeordnet sind, wobei der Abstand zwischen den krallenartigen Ansätzen und der den Schenkeln abgewandten Außenseite der U-Basis auf die Dicke des Tragelements abgestimmt ist.

Zur Positionierung der Anschlußvorrichtung an dem Tragelement in dessen Längsrichtung gesehen, weist die Anschlußvorrichtung wenigstens eine in Längsrichtung des Tragelements weisende Schulter auf, der eine Gegenschulter des Tragelements zugeordnet ist. Es ergibt sich somit eine formschlüssige Positionierungshilfe, die vor dem Klebevorgang wirksam wird.

Eine absolute Sicherung der Montageposition der Anschlußvorrichtung an dem Tragelement ergibt sich, wenn die Anschlußvorrichtung zumindest zwei nach entgegengesetzten Richtungen weisende Schultern hat, denen jeweils eine Gegenschulter des Tragelements zugeordnet sind.

Weitere, vorteilhafte Weiterbildungen und Ausgestaltungen der Erfindung sind in der nachfolgenden Beschreibung von in der Zeichnung dargestellten Ausführungsformen angegeben.

### Zeichnung

In der Zeichnung zeigen:

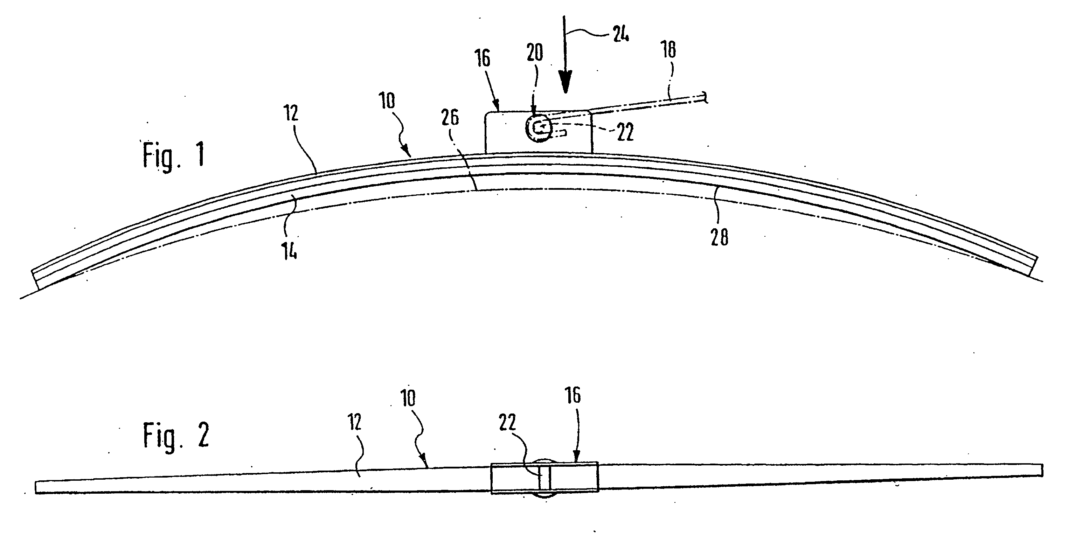

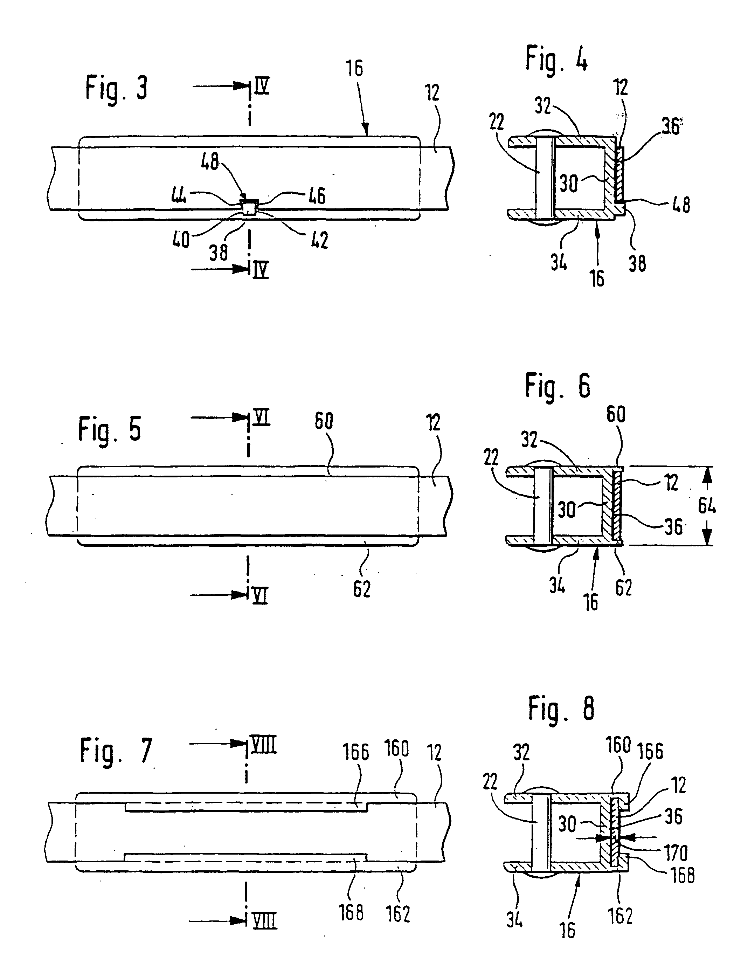

Figur 1 eine Seitenansicht eines erfindungsgemäßen Wischblatts, Figur 2 eine Draufsicht auf das Wischblatt gemäß Figur 1, Figur 3 eine Ansicht von unten auf ein zum Wischblatt gehörendes Tragelement in vergrößerter Darstellung, Figur 4 einen Schnitt durch die Anordnung gemäß Figur 3, entlang der Linie IV-IV wobei in den Figuren 3 und 4 lediglich ein Detail einer Weiterbildung dargestellt ist und zur Verdentlichung weitere Merkmale weggelassen sind, Figur 5 eine Ansicht von unten auf ein zum Wischblatt gehörendes, mit einer ersten Ausführungsform der Anschlußvorrichtung versehenes Tragelement, in vergrößerter Darstellung, Figur 6 einen Schnitt durch die Anordnung gemäß Figur 5 entlang der Linie VI-VI, Figur 7 eine Ansicht von unten auf ein zum Wischblatt gehörendes, mit einer zweiten Ausführungsform der Anschlußvorrichtung versehenes Tragelement in vergrößerter Darstellung und Figur 8 einen Schnitt durch die Anordnung gemäß Figur 7, entlang der Linie VIII-VIII.

### Beschreibung des Ausführungsbeispiels

Ein in den Figuren 1 und 2 dargestelltes Wischblatt 10 weist ein langgestrecktes, federelastisches Tragelement 12 auf, an dessen Unterseite eine langgestreckte, gummielastische Wischleiste 14 längsachsenparallel befestigt ist. An der Oberseite des auch als Federschiene zu bezeichnenden Tragelements ist in dessen Mittelabschnitt eine Anschlußvorrichtung 16 angeordnet, mit deren Hilfe das Wischblatt mit einem angetriebenen Wischerarm 18 lösbar verbunden werden kann. An dem freien Ende 20 des Wischerarms 18 ist ein als Gegenanschlußmittel dienender Haken angeformt, welcher einen zur Anschlußvorrichtung 16 des Wischblatts gehörenden Gelenkbolzen 22 umgreift. Die Sicherung zwischen dem Wischerarm 18 und dem Wischblatt 10 wird durch nicht näher dargestellte, an sich bekannte, als Adapter ausgebildete Sicherungsmittel übernommen. Der Wischerarm 18 und damit auch der Haken am Ende 20 ist in Richtung des Pfeiles 24 zur zu wischenden Scheibe belastet, deren zu wischende Oberfläche in Figur 1 durch eine strichpunktierte Linie 26 angedeutet ist. Da die strichpunktierte Linie 26 die stärkste Krümmung der Scheibenoberfläche darstellen soll, ist klar ersichtlich, daß die Krümmung des mit seinen beiden Enden an der Scheibe anliegenden Wischblatts stärker ist als die maximale Scheibenkrümmung. Unter dem Anpreßdruck (Pfeil 24) legt sich das Wischblatt mit seiner Wischlippe 28 über seine gesamte Länge an der Scheibenoberfläche 26 an. Dabei baut sich im federelastischen Tragelement 12 eine Spannung auf, welche für eine ordnungsgemäße Anlage der Wischleiste 14 bzw. deren Wischlippe 28 über deren gesamte Länge an der Scheibe sorgt.

Im folgenden soll die Verbindung zwischen dem Tragelement 12 und der Anschlußvorrichtung 16 anhand der Figuren 3 und 4, 5 und 6 sowie 7 und 8 näher erläutert werden. Bei der in den Figuren 3 und 4 gezeigten Weiter bildung der Erfindung ist die im Querschnitt im wesentlichen U-förmige Anschlußvorrichtung 16 mit der Außenseite ihrer U-Basis 30 flächig an der einen, von der zu wischenden Scheibe abgewandten Oberfläche des bandartigen Tragelements 12 angelegt. Die U-Schenkel 32 und 34 der Anschlußvorrichtung 16 erstrekken sich auf der von dem Tragelement 12 abgewandten Seite der U-Basis 30. In dem U-Schenkeln 32 und 34 ist der Gelenkbolzen 22 gelagert. Die Befestigung der Anschlußvorrichtung 16 an dem Tragelement 12 erfolgt mit Hilfe eines Klebers, der zwischen die einander zugewandten Flächen der U-Basis 30 der Anschlußvorrichtung 16 und der dieser zugewandten Oberfläche des Tragelements 12 vorhanden ist. Diese Klebefläche ist in Figur 4 mit der Bezugszahl 36 versehen worden.

Als Positionierungshilfe weist die U-Basis 30 der Anschlußvorrichtung von ihrer an dem U-Schenkeln 32 und 34 abgewandten Seite einen Vorsprung 38 auf, der - in Längsrichtung des Tragelements 12 gesehen - zwei nach entgegengesetzten Richtungen weisende Schultern 40 und 42 hat. Diesen Schultern 40 und 42 sind jeweils eine Gegenschulter 44 und 46 des Tragelements zugeordnet, die an einer Ausnehmung 48 des Tragelements 12 ausgebildet sind. Da diese Schultern in Längsrichtung des Tragelements weisen, ergibt sich eine formschlüssige Verbindung zwischen dem Tragelement 12 und der Anschlußvorrichtung 16 in Längsrichtung des Tragelements. Dieser Formschluß dient als Positionierungshilfe, wenn die Klebeverbindung erfolgt.

Bei dem Ausführungsbeispiel gemäß den Figuren 5 und 6 - das eine Fortbildung der Anordnung gemäß den Figuren 3 und 4 darstellt - sind an der von den U-Schenkeln 32 und 34 abgewandten Seite der U-Basis 30 zwei mit Abstand voneinander angeordnete leistenartige Vorsprünge 60 und 62 angeordnet, deren Abstand voneinander auf die Breite 64 des Tragelements abgestimmt ist. Die sich in Längsrichtung des Tragelements 12 erstreckenden leistenartigen Vorsprünge 60 und 62 bilden seitliche Führungen, welche die Position der Anschlußvorrichtung 16 an dem Tragelement 12 quer zu dessen Längserstreckung sichern. Die leistenartigen Vorsprünge 60 und 62 sind in den Figuren 3 und 4 zwecks der Übersichtlichkeit nicht gezeichnet.

Die Ausführungsform gemäß den Figuren 7 und 8 baut auf der Ausführungsform gemäß den Figuren 5 und 6 auf. Abweichend von dieser Ausführungsform, sind zur weiteren Vereinfachung der Vormontage die leistenartigen Vorsprünge 160 und 162 an ihren von der U-Basis 30 abgewandten, freien Enden mit krallenartigen, gegeneinander gerichteten Ansätzen 166 und 168 versehen. Der Abstand zwischen der von dem U-Schenkeln 32, 34 abgewandten Außenseite der U-Basis 30 und den dieser zugewandten Seite der Ansätze 166, 168 ist auf die Dicke 170 des Tragelements 12 abgestimmt. Die Abstimmung ist so getroffen, daß ebenso wie bei der Ausführungsform gemäß den Figuren 5 und 6 eine leichte, jedoch weitgehend spiellose Relativbewegung zwischen den beiden Bauteilen 12 und 16 möglich ist.

Die Befestigung der Anschlußvorrichtung 16 am Tragelement-12 erfolgt bei den beiden Ausführungsformen gemäß den Figuren 5 und 6 sowie den Figuren 7 und 8 - wie bei der Weiterbildung gemäß den Figuren 3 und 4 beschrieben - durch einen Kleber, der zwischen die einander zugewandten Flächen des bandartigen Tragelements 12 und der U-Basis 30 der Anschlußvorrichtung 16 als Schicht 36 eingebracht wird.

Die Klebeverbindung zwischen dem Tragelement 12 und der Anschlußvorrichtung 16 kann stets angewandt werden. Es ist dabei gleichgültig, ob die Federleiste 12 aus einem Kunststoff oder aus einem elastischen Metall besteht, an welcher die aus einem Kunststoff oder einem Metall bestehende Anschlußvorrichtung 16 befestigt werden soll. Weiter wird darauf hingewiesen, daß die bei der Weiterbildung gemäß den Figuren 3 und 4 geschilderte Formschlußverbindung - Vorsprung 38 mit seinen Schultern 40 und 42 sowie die Ausnehmung 48 mit ihren Gegenschultern 44 und 46 - sowohl bei den Ausführungsformen gemäß den Figuren 5 und 6 als auch 7 und 8 verwendet werden kann. Weiter wird noch darauf hingewiesen, daß das bandartige Tragelement 12 bei den Ausführungsbeispielen zwar einteilig ausgebildet ist, doch kann dieses auch aus mehreren Teilen bestehen, ohne daß deshalb der Rahmen der vorliegenden Erfindung verlassen wird.

Es ist klar, daß die Gegenschultern 44, 46 - abweichend vom gezeichneten Ausführungsbeispiel - nicht zwingend an einer randoffenen Ausnehmung 48 des Tragelements 12 ausgebildet sein müssen. Mit Rücksicht auf die im Tragelement vorhandene, zur Scheibe gerichtete Arbeitsspannung kann es von Vorteil sein die Gegenschultern in einem Bereich des Tragelements anzuordnen, der diesbezüglich unsensibel ist. Dies kann beispielsweise auch in einem dem zentralen Bereich der U-Basis 30 gegenüberliegende Bereich des Tragelements geschehen, wobei die Gegenschultern an einem rundum geschlossenen Durchbruch ausgebildet sind. Dementsprechend sind dann auch die mit diesen zusammenwirkenden Schultern an der Anschlußvorrichtung 16 zu plazieren.

Weiter ist noch festzuhalten, daß die Anordnung der beschriebenen Positionierungshilfe unabhängig davon anwendbar ist, auf welche Weise die Anschlußvorrichtung mit dem Tragelement verbunden werden soll.

## Patentansprüche

1. Wischblatt (10) für Scheiben von Kraftfahrzeugen, mit einer an der zu wischenden Scheibe (26) anlegbaren, langgestreckten, gummielastischen Wischleiste (14), die im wesentlichen längsachsenparallel an einem langgestreckten, federelastischen Tragelement (12) gehalten ist, an dessen Mittelabschnitt auf der von der Scheibe abgewandten Seite eine Anschlussvorrichtung (16) für einen zur Scheibe belastbaren, angetriebenen Wischerarm befestigt ist, wobei die Anschlussvorrichtung (16) als separates Bauteil ausgebildet ist, **dadurch gekennzeichnet, dass** sich in Längsrichtung des Tragelements (12) erstreckende, leistenartige, seitliche Führungen bildende Vorsprünge (60, 62, 160, 162) vorhanden sind, die die Position der Anschlussvorrichtung (16) an dem Tragelement (12) quer zu dessen Längserstreckung sichern, und dass das Anschlusselement (16) mittels eines Klebers an dem Tragelement (12) befestigt ist.

2. Wischblatt nach Anspruch 1, **dadurch gekennzeichnet, daß** die Anschlußvorrichtung (16) einen im wesentlichen U-förmigen Querschnitt hat und mit der ihre beiden U-Schenkel (32, 34) verbindenden U-Basis (30) flächig an der von der Scheibe abgewandten Seite des bandartig ausgebildeten Tragelements (12) anliegt.

3. Wischblatt nach Anspruch 2, **dadurch gekennzeichnet, daß** die U-Basis (30) der Anschlußvorrichtung (16) an ihrer von den U-Schenkeln (32, 34) abgewandten Seite mit Vorsprüngen (60, 62) versehen ist, welche quer zur Längserstreckung des Tragelements (12) mit einem Abstand (64) voneinander liegen, welche auf die Breite des Tragelements (12) abgestimmt ist.

4. Wischblatt nach Anspruch 3, **dadurch gekennzeichnet, daß** die Vorsprünge (60, 62) als Leisten ausgebildet sind, die sich in Längsrichtung des Tragelements (12) erstrecken.

5. Wischblatt'nach Anspruch 4, **dadurch gekennzeichnet, daß** an den freien, von der U-Basis (30) abgewandten Enden der Leisten (160, 162) krallenartige, gegeneinander gerichtete Ansätze (166, 168) angeordnet sind und daß der Abstand zwischen den krallenartigen Ansätzen (166, 168) und der von den Schenkeln (32, 34) abgewandten Außenseite der U-Basis (30) auf die Dicke (170) des Tragelements (12) abgestimmt ist.

6. Wischblatt nach einem der Ansprüche 2 bis 5, **dadurch gekennzeichnet, daß** an der Anschlußvorrichtung (16) wenigstens eine in Längsrichtung des Tragelements (12) weisende Schulter (40 bzw. 42) angeordnet ist, der eine Gegenschulter (44 bzw. 46) des Tragelements (12) zugeordnet ist.

7. Wischblatt nach Anspruch 6, **dadurch gekennzeichnet, daß** die Anschlußvorrichtung (16) mit zumindest zwei nach entgegengesetzten Richtungen weisenden Schultern (40 und 42) versehen ist, denen jeweils eine Gegenschulter (44 und 46) des Tragelements (12) zugeordnet ist.

8. Wischblatt nach Anspruch 7, **dadurch gekennzeichnet, daß** die Schultern (40 und 42) der Anschlußvorrichtung (16) an einem Vorsprung (38) der Anschlußvorrichtung (16) und die Gegenschultern (44 und 46) an einer dem Vorsprung (38) zugeordneten Ausnehmung (48) des Tragelements (12) ausgebildet sind.

## Claims

1. Wiper blade (10) for windows of motor vehicles, having an elongated, elastomeric wiper strip (14) which can be placed against the window (26) to be wiped and is held essentially parallel to the longitudinal axis on an elongated, resilient supporting element (12) to whose central section, on the side which faces away from the window, is fastened a connecting device (16) for a driven wiper arm which can be loaded towards the window, the connecting device (16) being designed as a separate component, **characterized in that** strip-like projections (60, 62, 160, 162) which extend in the longitudinal direction of the supporting element (12) and form lateral guides are provided, the projections securing the position of the connecting device (16) on the supporting element (12) transversely with respect to its longitudinal extent, and **in that** the connecting element (16) is fastened to the supporting element (12) by means of an adhesive.

2. Wiper blade according to Claim 1, **characterized in that** the connecting device (16) has an essentially U-shaped cross section and with the U-base (30), which connects its two U-ends (32, 34), bears in a planar manner against that side of the supporting element (12), which is of band-like design, which faces away from the window.

3. Wiper blade according to Claim 2, **characterized in that** the U-base (30) of the connecting device (16) is provided, on its side facing away from the U-ends (32, 34), with projections (60, 62) which are situated transversely with respect to the longitudinal extent of the supporting element (12) at a distance (64) from one another which is matched to the width of the supporting element (12).

4. Wiper blade according to Claim 3, **characterized in that** the projections (60, 62) are designed as strips which extend in the longitudinal direction of the supporting element (12).

5. Wiper blade according to Claim 4, **characterized in that** claw-like steps (166, 168) directed towards each other are arranged at the free ends of the strips (160, 162), which ends face away from the U-base (30), and **in that** the distance between the claw-like steps (166, 168) and the outside of the U-base (30), which side faces away from the ends (32, 34) is matched to the thickness (170) of the supporting element (12).

6. Wiper blade according to one of Claims 2 to 5, **characterized in that** at least one shoulder (40 or 42) pointing in the longitudinal direction of the supporting element (12) is arranged on the connecting device (16), the said shoulder being assigned a mating shoulder (44 or 46) of the supporting element (12).

7. Wiper blade according to Claim 6, **characterized in that** the connecting device (16) is provided with at least two shoulders (40 and 42) which point in opposite directions and are in each case assigned a mating shoulder (44 and 46) of the supporting element (12).

8. Wiper blade according to Claim 7, **characterized in that** the shoulders (40 and 42) of the connecting device (16) are formed on a projection (38) of the connecting device (16) and the mating shoulders (44 and 46) are formed on a recess (48) of the supporting element (12), which recess is assigned to the projection (38).

## Revendications

1. Balai d'essuie-glace (10) pour vitres de véhicules automobiles, comprenant une raclette (14) allongée, élastique à la façon du caoutchouc, pouvant être appliquée contre la vitre (26) à essuyer, fixée essentiellement de façon parallèle à son axe longitudinal, à un élément porteur (12) allongé, élastique à la façon d'un ressort, au segment central duquel, sur le côté éloigné de la vitre, est fixé un dispositif de montage (16) pour un bras d'essuie-glace entraîné, pouvant être pressé sur la vitre, dans lequel le dispositif de montage (16) est constitué par un élément séparé,
**caractérisé en ce qu'**
il est prévu des saillies (60, 62, 160, 162) qui s'étendent dans la direction longitudinale de l'élément porteur (12) et qui forment des guides latéraux en forme de réglettes s'étendant dans la direction longitudinale de l'élément porteur (12), saillies qui arrêtent la position du dispositif de montage (16) sur l'élément porteur (12) transversalement à l'extension longitudinale de cet élément et le dispositif de montage (16) est fixé à l'élément porteur (12) au moyen d'une colle.

2. Balai d'essuie-glace selon la revendication 1,
**caractérisé en ce que**
le dispositif de montage (16) possède une section en forme de U et s'appuie à plat, par la base du U (30) qui relie les deux branches de U (32, 34) contre le côté de l'élément porteur (12) le plus éloigné de la vitre et réalisé en forme de bande,.

3. Balai d'essuie-glace selon la revendication 2,
**caractérisé en ce que**
la base de U (30) du dispositif de montage (16) est munie, sur son côté éloigné des branches de U (32, 34), de saillies (60, 62) écartées l'une de l'autre selon un écart (64), transversalement à l'extension longitudinale de l'élément porteur (12), ce côté étant adapté à la largeur de l'élément porteur (12).

4. Balai d'essuie-glace selon la revendication 3,
**caractérisé en ce que**
les saillies (60, 62) sont constituées par des réglettes qui s'étendent dans la direction longitudinale de l'élément porteur (12).

5. Balai d'essuie-glace selon la revendication 4,
**caractérisé en ce qu'**
aux extrémités libres des réglettes (160, 162) qui sont éloignées de la base de U (30), sont disposés des appendices (166, 168) en forme de crampons, dirigés l'un vers l'autre, et la distance entre les appendices (166, 168) en forme de crampon et le côté extérieur de la base de U (30) éloigné des branches (32, 34) est adaptée à l'épaisseur (170) de l'élément porteur (12).

6. Balai d'essuie-glace selon une des revendications 2 à 5,
**caractérisé en ce que**
le dispositif de montage (16) porte au moins un épaulement (40 ou 42) dirigé dans la direction longitudinale de l'élément porteur (12) et auquel est associé un épaulement conjugué (44 ou 46) de l'élément porteur (12).

7. Balai d'essuie-glace selon la revendication 6,
**caractérisé en ce que**
le dispositif de montage (16) est muni d'au moins deux épaulements (40 et 42) dirigés dans des directions opposées, à chacun desquels est associé un épaulement conjugué (44 et 46) de l'élément porteur (12).

8. Balai d'essuie-glace selon la revendication 7,
**caractérisé en ce que**
les épaulements (40 et 42) du dispositif de montage (16) sont formés sur une saillie (38) du dispositif de montage (16) et les épaulements conjugués (44 et 46) sont formés sur un évidement (48) de l'élément porteur (12) associé à la saillie (38).
